# EUROPEAN PATENT SPECIFICATION

(11) **EP 3 779 266 B1**
(45) Date of publication and mention of the grant of the patent: **26.02.2025**
(21) Application number: 19191366.4
(22) Date of filing: 13.08.2019
(51) Int. Cl.: F21S 2/00, F21V 8/00, F21S 8/04, F21V 7/05, F21Y 115/10, F21Y 115/30

(54) **LIGHTING SYSTEM FOR DISTRIBUTING LIGHT FROM A SINGLE SOURCE FOR ILLUMINATING A BUILDING**
BELEUCHTUNGSSYSTEM ZUR LICHTVERTEILUNG AUS EINER EINZIGEN QUELLE ZUR BELEUCHTUNG EINES GEBÄUDES
SYSTÈME D'ÉCLAIRAGE POUR DISTRIBUTION DE LUMIÈRE À PARTIR D'UNE SEULE DE SOURCE POUR ÉCLAIRER UN BÂTIMENT

(43) Date of publication of application: 17.02.2021
(73) Proprietor: Tridonic GmbH & Co. KG, 6851 Dornbirn (AT)
(72) Inventor: de Clercq, Ludwig Erasmus, 6850 Dornbirn (AT)
(74) Representative: Beder, Jens

(56) References cited:
- DE-U1- 8 708 467
- US-A- 4 152 752
- US-A- 5 560 700
- US-A- 6 106 140
- US-A1- 2009 310 365
- US-A1- 2015 354 785
- US-A1- 2016 377 787

## Description

The invention regards a lighting system that distributes light from a single source for illumination purposes in a building.

Document US 4,152,752 discloses an illumination system and an apparatus therefor.

In modern buildings many luminaires are installed. These luminaires may be switched individually or in groups and dimmed using a network installed in the building and integrating the individual luminaires. However, each of the luminaires needs a separate operating device when modern light sources such as LEDs are used. Thus, when there are a high number of luminaires installed in the building, the number of operating devices necessarily also increases. Consequently, the costs for such an installation also increase not only because of the number of luminaires and operating devices that are needed, but also maintenance of such systems becomes more complex. This includes monitoring the functionality of the entire system but also replacement of light sources in case of a failure.

In public buildings it is necessary that someone is responsible for checking the functionality of the individual light sources in order to determine whether there is a failure and a need for replacement of individual light sources. Obviously, additional manpower needed for such maintenance work is costly. During installation of the systems one problem is that mounting the luminaires and commissioning the system is done often in an early phase of the construction work when the regular power supply is not yet available.

Thus, it is desirable to provide a lighting system for illuminating a building or an area outside with a central light source that is easier to install while a building is under construction and that can easily be put into operation once power supply of the building is available. Furthermore, the lighting system shall be easy to maintain.

This object is achieved by the system according to the present invention.

The lighting system according to the invention comprises at least two spatially distributed light emitting elements that are connected to a central light source such that light can be transmitted from the central light source to the individual light emitting elements. The distribution of light that is generated by the central light source is done by a light guide network that is established by light guides guiding the light from the central light source to all the individual light emitting elements of the system. The light emitting elements each have a light input port for coupling in light from the at least one light guide of the network. The light emitting elements are configured to emit light received via the light input port via at least one light emitting surface of the light emitting element. A deflector is arranged between the light guide and the input port of a light emitting element, wherein the deflector is configured to alter over time the location at which the light transferred by the light guide enters the input port of the light emitting element.

Thus, according to the invention there is only one light source needed instead of a high number of operation devices and associated luminaires or light sources. In particular, maintenance including checking whether the light source is actually operating, can be done at a single location because the distribution network that is used for forwarding the light to the light emitting elements does not show any wear. The manpower thus needed for performing the maintenance is drastically reduced compared to a situation where a person needs to regularly walk around the entire building or illuminated areas outside and check functionality of each individual luminaire because these individual luminaires have independent light sources.

Since in modern buildings channels and spaces for installing networks are available anyway, the installation of a system according to the invention and using a light guide network is very easy and can be effected rather quickly. Further, power supply is needed only at a single location in a building, where the light source is positioned because transmission of the light from the light source to the individual light emitting elements is passive. Further, since only light guides are used to connect the single light source with the entirety of light emitting elements of the system, less regulations than in a system that needs to distribute electric power need to be taken into account. For example, distances toward cubes or the like do not need to be considered. This increases flexibility in the design of the lighting system or even the entire building.

Additional advantages and aspects are defined in the dependent claims.

According to a preferred embodiment, the light emitting element is a slab consisting of a transparent material with at least one light reflecting surface for a directed light emission. Light that is introduced into the slab, which is in most cases a cuboid made from the transparent material, at the input port is reflected at each surface which is reflective. A preferred rate to provide a reflective surface on the slab is to code the respective surface of the slab using a reflective material. Light that is reflected at these surfaces, thus, may then also be emitted into the desired direction. To maximize the light output of a cuboid slab it is thus possible to have in total four reflecting surfaces, one surface as a light input port and one light emitting surface. Of course, the slab may also have a different shape, especially with a curved light emitting surface.

In order to establish the light emitting surface, it is preferred that light scattering is used. Light scattering may be caused by a forming a light scattering surface by coating the respective surface of the slab or including a layer in the slab having light scattering properties. In the latter case, the light scattering portion, which is part of the slab, is arranged in the slab such that the light emitting surface is directly formed by the light scattering portion of the slab. Using light scattering for coupling out light from the slab introduced its input port has the advantage that in a very easy way homogeneous light emission can be realized. Further, such a light scattering surface or layer in the slab are easy to manufacture and, thus, the light emitting element can be produced at reasonable costs.

According to another preferred embodiment, the light emitting element is a slab which comprises a plurality of successive light emitting sections arranged sequentially in a light traveling direction. Thus, starting from the light input port where light received from the light guides is introduced into the slab, there are a plurality of light emitting surfaces provided. The passage between the light emitting surfaces may be covered with reflective material in order to clearly limit light emission to areas provided with the light scattering material.

It is particularly preferred to use white laser or white LED as the central light source for generating light that is coupled into the network in order to be distributed to the light emitting elements. In particular, using laser light has the advantage that light with a highly energy density is used and, consequently, building the light guide network is rather easy and does not need a lot of space. Rather thin light guides can be used. On the other hand, using white LEDs as the central light source has the advantage that this technology is rather cheap and it is easily possible to adjust parameters of the emitted light to the desires of an architect or a user. Due to the power that is available from a laser as a central light source, using a white laser is preferred for larger systems comprising a high number of light emitting elements.

The light guide is preferably an optical transmission fibre. Using such an optical transmission fibre bears high flexibility when installing the system in a building. Further, energy loss over the length of the optical transmission fibres is rather small and thus, specifically for large buildings in which long distances may exist over which light from the central light source needs to be transported to the light emitting element, the operational costs for the system can be kept low.

According to another preferred embodiment, the system comprises at least one group of light emitting elements with each of the light emitting elements of the group being connected to a dedicated light guide. This dedicated light guide connects the light-emitting elements of the group with the central light source. Arranging a plurality of light emitting elements together in one group and then connecting the group with the central light source via the dedicated light guide has the advantage that only a limited number of such dedicated light guides is necessary to be connected to the central light source and thus, even in large buildings the space needed for the dedicated light guides is reasonable.

In such a system with a plurality of individual light-emitting elements forming one group, it is specifically preferred that the dedicated light guide consists of a common light guide section and one light guide branch for each of the light-emitting elements of the group. Branching the common light guide section enables to reduce the amount of light guides that need to be installed in larger buildings and that need to be directly coupled with the central light source significantly. Only the common light guide section is used for a long distance in order to transfer the light from the central light source before the common light guide section branches into a plurality of light guide branches, each supplying light to one (or maybe a plurality out of the entirety of light-emitting elements of the group) light-emitting element of the group. The light guide branches are spliced to the common light guide section. Since techniques for splicing light guides are well known in the art, this has the advantage that assembly of the dedicated light guide can be made from standard light guides during installation of the system.

Further, the system may comprise at least one spatial light modulator for at least one of the groups of light-emitting elements or at least one light-emitting element for selectively dimming or blocking light emission. Such spatial light modulators may be used for white LEDs as central light source but in a preferred embodiment, the spatial light modulators are used in connection with a white laser as central light source. By using such spatial light modulators it is easy to block the light guided along the (dedicated) light guide, thereby "switch off and on" a light-emitting element or an entire group of light-emitting elements, depending on the actual position at which the spatial light modulator is installed between the central light source and the light-emitting element(s). Alternatively, an electrochromic glass could be used to achieve the same effect.

As outlined above, a deflector is arranged between the light guide and the input port of a light-emitting element. Using such a deflector, which according to the invention is configured to alter over time the location at which the light transferred by the light guide enters the input port of the light emitting element (e.g. slab) or as an example not covered by the claims may statically widen the cross-section at the end of the light guide, reduces the risk of overheating the slab at the location where the light enters into the input port. This is particularly an advantage in systems using high laser energy but may also be used in systems with less energy or systems using white LEDs as central light source.

The invention will now be described with reference to the annexed drawings in which
- Figure 1: shows a schematic of a building for illustrating a plurality of possible designs of the inventive system, and
- Figure 2: illustrates in a simplified manner the function of the inventive system using a light source distant from the finally light emitting element.

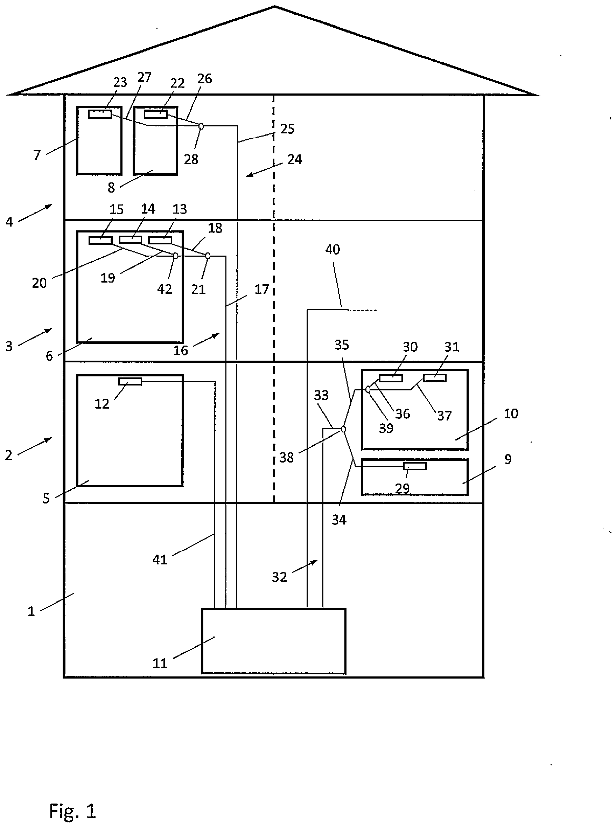

In figure 1, one exemplary building 1 is shown in a simplified manner as a cross-section. In the illustrated example, the building 1 is a three floor building that comprises a first floor 2, a second floor 3, and a third floor 4. For explaining the different opportunities, how the present application may be applied for establishing a lighting system for the building 1, different scenarios are illustrated using rooms 5 to 10. Starting with the first room 5, the basic principle of the present invention can be explained. Illumination of the building 1 is based on light that is generated at a central position in the building 1, which, in the illustrated embodiment is a white laser 11. Other light sources, such as white LEDs, which generate light at only one single location within the building 1 may be used as well.

The light that is generated by the white laser 11 needs to be transmitted to light emitting elements such the light-emitting element 12 that is mounted in the first room 5. Transmission of the light from the white laser 11 to the first lighting element 12 is done using a light guide network, in the preferred embodiment formed by a plurality of optical fibres. A first optical fibre is denoted with reference 41 which is a dedicated light guide connecting the first light-emitting element 12 directly with the white laser 11.

The system further comprises at least one additional lighting element which is connected via the same light guide network with the same central light source, namely the white laser 11.

Examples will now be explained referring to the drawing, I which the light guide network comprises a plurality of optical fibres, connecting the individual light emitting elements with the white laser 11.

For illuminating the second room 6, a plurality of light-emitting elements 13, 14 and 15 are used. All these light-emitting elements 13, 14 and 15 are connected via a dedicated light guide 16, namely a second optical fibre. Since a plurality of individual lighting elements 13, 14 and 15 need to be connected to the white laser 11, the dedicated light guide 16 comprises a common light guide section 17 and light guide branches 18, 19 and 20. As indicated by the circles 21 and 42, the light guide branches 18, 19 and 20 are spliced to the common light guide portion 17. A plurality of different techniques for splicing the branches to the common light guide portion 17 are known from the prior art and depending on the situation and the available personal for installations, a suitable technique may be chosen. Such a technique may be welding the ends of the light guide branches 18, 19 and 20 and the common light guide section 17, but also using specific connectors.

In the third floor 4, two rooms 7 and 8 are shown, each of which is provided with one light-emitting element 22 and 23, respectively. Apart from the fact that the light-emitting elements 22 and 23 are arranged in individual rooms 7 and 8, the situation is comparable to the one described with reference to the second room 6. Thus, again, the two lighting elements 22, 23 are connected with the white laser 11 using a dedicated light guide 24, consisting of a common light guide section 25 spliced at position 28 with light guide branches 26 and 27, each providing light from the white laser 11 to both, the light-emitting elements 22 or 23.

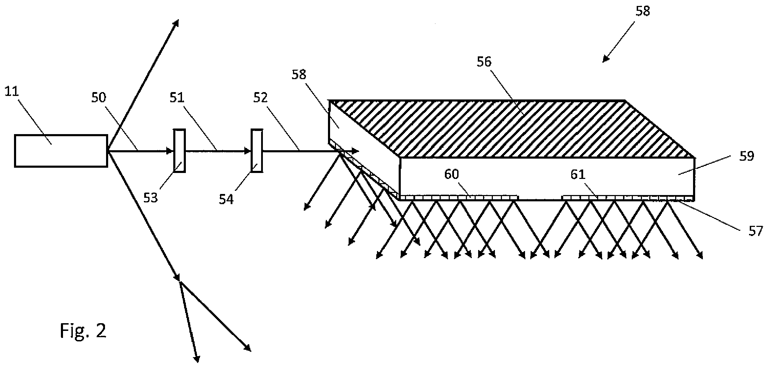

From the situation described with reference to the third floor 4, it is clear that it is necessary to individually switch the light-emitting elements 22 and 23. Later on, with respect to figure 2, it will be explained that switching and dimming of lighting elements is generally possible using spatial light modulators. These spatial light modulators may be arranged in the common light guide section 17, which, in the illustrated embodiment of figure 1 might be reasonable with respect to the second room 6 or it may be arranged in the light guide branches 26 and 27 to individually switch on and off the light emitted by one of the lighting elements 22 or 23, which would be reasonable to switch the light in rooms 7 and 8. It is to be noted that the embodiment use spatial light modulators for explanation. However, electrochromic glasses or films may be used instead, which might even be preferred due to a cost advantage.

Further, such spatial light modulators might even be included in the individual lighting elements. But in case that a plurality of lighting elements shall be switched or dimmed commonly, it is preferred to arrange the spatial light modulator in the common light guide section, for example, common light guide section 17, of the respective light-emitting elements 13, 14, 15. Such an arrangement reduces the cost due to limiting the number of needed parts for the system.

On the right side of the building 1, a preferred structure of the inventive system is shown. As illustrated, the first floor 2 here comprises a plurality of rooms 9 and 10. Of course, a higher number of rooms might be present. The rooms 9 and 10 on the first floor 2 of the building 1 are supplied with light from the white laser 11 using a further dedicated light guide 32. This dedicated light guide 32 supplies light to the light-emitting element 29 in room 9 but also to the light-emitting elements 30 and 31 mounted in room 10. The dedicated light guide 32 thus supplies light to a plurality of light-emitting elements 29, 30, 31, wherein these elements establish a group of light-emitting elements, similar to light-emitting elements 13, 14 and 15 as explained with reference to room 6.

Contrary to the situation in room 6, the dedicated light guide 32 branches at two successive positions 38 and 39. First, from position 38, a light guide branch 34 connects the common light guide section 33 of the dedicated light guide 32 with the light-emitting element 29. Further, the second, intermediate branch 35 further branches at position 39 into light guide branch 36 and light guide branch 37. This example is used to show that even a light guide branch may be further branched off in order to supply light to individual light emitting elements.

As can be derived from the above given explanations, a plurality of light-emitting elements is supplied by a single, central light source with light, wherein these light-emitting elements are connected to the central light source via a light guide network. In such a light guide network, it is possible to group a plurality of individual light-emitting elements according to the needs of the structure of the building 1.

For explaining the function of the system, only a single central light source, namely the white laser 11, was used. Of course, it is possible to provide a building 1 with a plurality of inventive systems, thus, installing a number of central light sources greater than one, each connected via a respective light guide network with the associated light-emitting elements.

Referring now to figure 2, the functioning of the inventive system shall be explained. Light is produced by the central light source, i.e., white laser 11. The laser light of the white laser 11 is coupled into a plurality of light guides illustrated by the arrows starting from the white laser 11. Each of these light guides (dedicated light guides) may branch into a plurality of light guide branches as explained with reference to figure 1. For simplicity of the explanation, only one dedicated light guide will be explained in detail, without any branches and consisting of a plurality of elements 50, 51, 52. However, it is obvious that the components 53 and 54, explained hereinafter and arranged between the elements 50, 51, 52 between the white laser 11 and the exemplary light-emitting element 55 may be arranged at any other location of the dedicated light guide unless explained otherwise.

Starting from the white laser 11, the dedicated light guide as illustrated in figure 2 consists of three successive elements 50, 51 and 52. It is to be noted that the relative lengths of the three sections 50, 51 and 52 does not reflect the true relation between the lengths of these sections.

Between the first element 50 in the second element 51, there is arranged a spatial light modulator 53. Using such a spatial light modulator 53 enables to block light traveling along the dedicated light guide towards the light-emitting element 55. Thus, using such a spatial light modulator 53 allows to switch on and off the light-emitting element 55. The expression "switch on and off" is to be understood to correspond to the light-emitting element 55 either emitting light or not emitting light. Obviously, emission of light can be switched by inhibiting that light is coupled into an input port 58 of the light-emitting element 55.

Apart from entirely inhibiting that light is coupled into the input port 58 of the light-emitting element 55, the spatial light modulator 53 also allows to dim the finally output light. The structure and functionality of the spatial light modulator 53 itself is known in the art and thus, specific explanation thereof will be omitted.

As introduced above already, the light-emitting element 55 comprises a light input port 58. The light input port 58 is one side surface of a cuboid forming the light-emitting element 55. The cuboid is made of transparent material such that light can be introduced in the input port 58. It is preferred that at least the surface 56 opposing the light-emitting surface 57 is reflective, for example, covered by a reflective material, so that light received by the input port 58 may be reflected towards the light-emitting surface 57. At least the side forming the input port 58 is transparent so that light transported via the dedicated light guide consisting of elements 50, 51 and 52 in the illustrated embodiment can enter the light-emitting element 55 which is also called slab. The slab as shown in figure 2 has only one reflective surface 56 but it is additionally possible to also cover side surface 59 and the other side surfaces, not visible in figure 2 in order to increase efficiency of the entire system. In that case, only the surface forming the input port 58 and the light-emitting surface 57 are not reflective.

Light that is received by the input port 58 will be emitted from the light emitting surface 57 in order to illuminate a room or any part of the building or even an outside area. Coupling out light that is coupled into the input port 58 is performed by light scattering. Thus, the light-emitting surface 57 is either coated with a light scattering material or a portion of the slab cuboid, as indicated in figure 2 with reference numerals 60 and 61, consists of or includes a light scattering material. In that case, the outer, light-emitting surface 57 is directly formed by the light scattering portions 06 and 61 of the slab 55. In any case, when viewed from the light-emitting surface 57, this light emitting surface 57 is semi transparent in order to couple out laser light. The semi light emitting surface 57 diffuses the light, thereby avoiding to emit a focused laser beam.

Further, as it is shown in figure 2, there are two light scattering portions 60 and 61, successively arranged in the direction of light propagation that enters into the input port 58. Having such successive arrangement of a plurality of light emitting portions 60 and 61 (there may be more than two as shown in the example) allows to better adapt the position of light emission to the needs for illumination. The specific advantage is that using individual light-emitting elements 55 would need to branch a light guide from a common light guide section in order to operate a plurality of individual light-emitting elements 55 in parallel. Contrary, using a plurality of successively arranged light scattering portions 60 and 61 allows to use one common slab 55 with only a single input port 58 but, nevertheless, distributing the locations of light emission over a larger area.

Laser light has a very high energy density so that it might cause problems in the slab 55 at the position where the laser light is coupled into the input surface 58. It is to be noted, that the input port 58, rather its cross-section, is significantly larger than the cross-section of the light guide element 51. In order to prevent that the entire energy is coupled into the slab 55 in only a very small area of the input surface 58, a deflector 54 is used. It is evident, that the section of the light guide 52 is present only for illustration purposes but is in fact rather short. Using the deflector 54, the location at which the laser light is introduced into the input port 58 changes with time.

Such a deflector that operate mechanically (rotating mirror) for moving the location of coupling in the laser light into the input port 58, or in any other way that allows to timely change the input location of the laser light. Alternatively, according to an example not covered by the claims, the deflector 54 may be used to widen the cross-section of the laser lights compared to the cross-section of the light guide before the deflector 54 by beam forming the light enters into the input port 58. Distributing the input laser light over a larger area, either by changing the location of input or increasing the cross-section of the laser beam reduces the thermal stress for the slab 55. Thus, damage of the slab 55 may be prevented.

It is to be noted that any detail which, in a simplified manner, has been explained based on the schematic of figure 2 may be realized at any section of the dedicated light guides 13, 16, 24, 32 or 40.

## Claims

1. Lighting system comprising at least two spatially distributed light emitting elements (12, 13, 14, 15, 22, 23, 29, 30, 31, 55) connected to a central light source (11) via a light guide network established by light guides (41, 16, 24, 32, 40), wherein the light emitting elements (12, 13, 14, 15, 22, 23, 29, 30, 31, 55) each have a light input port (58) for coupling in light transmitted by the light guides (41, 16, 24, 32, 40) of the network and the at least two light emitting elements (12, 13, 14, 15, 22, 23, 29, 30, 31, 55) are configured to emit light received at its light input port (58) via at least one light emitting surface (57) of the light emitting element (12, 13, 14, 15, 22, 23, 29, 30, 31, 55), wherein
a deflector (54) is arranged between the light guide (41, 16, 24, 32, 40, 51) and the input port (58) of a light emitting element (12, 13, 14, 15, 22, 23, 29, 30, 31, 55),
**characterized in that**
the deflector (54) is configured to alter over time the location at which the light transferred by the light guide (41, 16, 24, 32, 40, 51) enters the input port (58) of the light emitting element (12, 13, 14, 15, 22, 23, 29, 30, 31, 55).

2. Light system according to claim 1,
**characterized in that**
the light emitting element (55) is a slab consisting of a transparent material having at least one light reflective surface (56) for a directed light emission.

3. Lighting system according to claim 2,
**characterized in that**
the slab (55) comprises at least one light scattering surface (57) or light scattering portion (60, 61) which directly forms the light emitting surface (57).

4. Lighting system according to any one of claims 1 to 3,
**characterized in that**
the light emitting element is a slab (55) comprising a plurality of successive light emitting sections (60, 61) arranged sequentially in a light travelling direction.

5. Lighting system according to any one of claims 1 to 4,
**characterized in that**
the central light source (11) is a white laser or a white LED light source.

6. Lighting system according to any one of claims 1 to 5,
**characterized in that**
the light guides (41, 16, 24, 32, 40) are optical transmission fibres.

7. Lighting system according to any one of claims 1 to 6,
**characterized in that**
the system comprises at least one of group of light emitting elements (13, 14, 15; 22, 23; 29, 30, 31), and each of the light emitting elements (13, 14, 15; 22, 23; 29, 30, 31) of the same group is connected by the same dedicated light guide (16, 24, 32) including a common light guide section (17, 25, 33) connecting the light emitting elements (13, 14, 15; 22, 23; 29, 30, 31) with the central light source (11).

8. Lighting system according to claim 7,
**characterized in that**
the dedicated light guide (16, 24, 32) consists of a common light guide section (17, 25, 33) and at least one light guide branch (18, 19, 20; 26, 27; 34, 35, 36, 37) for each of the light emitting elements (13, 14, 15; 22, 23; 29, 30, 31) of the group, wherein the light guide branches (18, 19, 20; 26, 27; 34, 35, 36, 37) are spliced directly or indirectly to the common light guide section (17, 25, 33).

9. Lighting system according to any one of claims 1 to 8,
**characterized in that**
at least one spatial light modulator (53) is provided for at least one of the light emitting elements (12, 13, 14, 15, 22, 23, 29, 30, 31) for selectively dimming or blocking light emission.

## Patentansprüche

1. Beleuchtungssystem, umfassend mindestens zwei räumlich verteilte lichtabgebende Elemente (12, 13, 14, 15, 22, 23, 29, 30, 31, 55), die über ein durch Lichtleiter (41, 16, 24, 32, 40) gebildetes Lichtleitungsnetzwerk mit einer zentralen Lichtquelle (11) verbunden sind, wobei die lichtabgebenden Elemente (12, 13, 14, 15, 22, 23, 29, 30, 31, 55) jeweils einen Lichteingangsport (58) zum Einkoppeln von den Lichtleitern (41, 16, 24, 32, 40) des Netzwerks übertragenem Licht aufweisen und die mindestens zwei lichtabgebenden Elemente (12, 13, 14, 15, 22, 23, 29, 30, 31, 55) konfiguriert sind, um an ihrem Lichteingangsport (58) empfangenes Licht über mindestens eine lichtabgebende Oberfläche (57) des lichtabgebenden Elements (12, 13, 14, 15, 22, 23, 29, 30, 31, 55) abzugeben, wobei
einen Deflektor (54) zwischen dem Lichtleiter (41, 16, 24, 32, 40, 51) und dem Eingangsport (58) eines lichtabgebenden Elements (12, 13, 14, 15, 22, 23, 29, 30, 31, 55) angeordnet ist,
**dadurch gekennzeichnet, dass**
der Deflektor (54) konfiguriert ist, um im Laufe der Zeit den Ort zu ändern, an dem das von dem Lichtleiter (41, 16, 24, 32, 40, 51) übertragene Licht in den Eingangsport (58) des lichtabgebenden Elements (12, 13, 14, 15, 22, 23, 29, 30, 31, 55) eintritt.

2. Lichtsystem nach Anspruch 1,
**dadurch gekennzeichnet, dass**
das lichtabgebende Element (55) eine aus transparentem Material bestehende Platte ist, die mindestens eine lichtreflektierende Oberfläche (56) für eine gerichtete Lichtabgabe aufweist.

3. Beleuchtungssystem nach Anspruch 2,
**dadurch gekennzeichnet, dass**
die Platte (55) mindestens eine Lichtstreuoberfläche (57) oder einen Lichtstreuabschnitt (60, 61) umfasst, der die lichtabgebende Oberfläche (57) direkt bildet.

4. Beleuchtungssystem nach einem der Ansprüche 1 bis 3,
**dadurch gekennzeichnet, dass**
das lichtabgebende Element eine Platte (55) ist, die eine Vielzahl aufeinanderfolgender lichtabgebender Sektionen (60, 61) umfasst, die in einer Lichtausbreitungsrichtung nacheinander angeordnet ist.

5. Beleuchtungssystem nach einem der Ansprüche 1 bis 4,
**dadurch gekennzeichnet, dass**
die zentrale Lichtquelle (11) ein weißer Laser oder eine weiße LED-Lichtquelle ist.

6. Beleuchtungssystem nach einem der Ansprüche 1 bis 5,
**dadurch gekennzeichnet, dass**
die Lichtleiter (41, 16, 24, 32, 40) optische Übertragungsfasern sind.

7. Beleuchtungssystem nach einem der Ansprüche 1 bis 6,
**dadurch gekennzeichnet, dass**
das System mindestens eine Gruppe von lichtabgebenden Elementen (13, 14, 15; 22, 23; 29, 30, 31) umfasst und jedes der lichtabgebenden Elemente (13, 14, 15; 22, 23; 29, 30, 31) der gleichen Gruppe durch den gleichen dedizierten Lichtleiter (16, 24, 32) verbunden ist, der eine gemeinsame Lichtleitersektion (17, 25, 33) einschließt, welche die lichtabgebenden Elemente (13, 14, 15; 22, 23; 29, 30, 31) mit der zentralen Lichtquelle (11) verbindet.

8. Beleuchtungssystem nach Anspruch 7,
**dadurch gekennzeichnet, dass**
der dedizierte Lichtleiter (16, 24, 32) aus einer gemeinsamen Lichtleitersektion (17, 25, 33) und mindestens einem Lichtleiterzweig (18, 19, 20; 26, 27; 34, 35, 36, 37) für jedes der lichtabgebenden Elemente (13, 14, 15; 22, 23; 29, 30, 31) der Gruppe besteht, wobei die Lichtleiterzweige (18, 19, 20; 26, 27; 34, 35, 36, 37) direkt oder indirekt zu dem gemeinsamen Lichtleiterabschnitt (17, 25, 33) zusammengefügt sind.

9. Beleuchtungssystem nach einem der Ansprüche 1 bis 8,
**dadurch gekennzeichnet, dass**
für mindestens eines der lichtabgebenden Elemente (12, 13, 14, 15, 22, 23, 29, 30, 31) mindestens ein räumlicher Lichtmodulator (53) zum selektiven Dimmen oder Blockieren der Lichtabgabe bereitgestellt ist.

## Revendications

1. Système d'éclairage comprenant au moins deux éléments électroluminescents répartis dans l'espace (12, 13, 14, 15, 22, 23, 29, 30, 31, 55) connectés à une source de lumière centrale (11) par l'intermédiaire d'un réseau de guides de lumière établi par des guides de lumière (41, 16, 24, 32, 40), dans lequel les éléments électroluminescents (12, 13, 14, 15, 22, 23, 29, 30, 31, 55) ont chacun un port d'entrée de lumière (58) pour coupler en entrée la lumière transmise par les guides de lumière (41, 16, 24, 32, 40) du réseau et les au moins deux éléments électroluminescents (12, 13, 14, 15, 22, 23, 29, 30, 31, 55) sont configurés pour émettre la lumière reçue au niveau de leur port d'entrée de lumière (58) par l'intermédiaire d'au moins une surface électroluminescente (57) de l'élément électroluminescent (12, 13, 14, 15, 22, 23, 29, 30, 31, 55), dans lequel
un déflecteur (54) est agencé entre le guide de lumière (41, 16, 24, 32, 40, 51) et le port d'entrée (58) d'un élément électroluminescent (12, 13, 14, 15, 22, 23, 29, 30, 31, 55),
**caractérisé en ce que**
le déflecteur (54) est configuré pour modifier au fil du temps l'emplacement au niveau duquel la lumière transférée par le guide de lumière (41, 16, 24, 32, 40, 51) entre dans le port d'entrée (58) de l'élément électroluminescent (12, 13, 14, 15, 22, 23, 29, 30, 31, 55).

2. Système d'éclairage selon la revendication 1,
**caractérisé en ce que**
l'élément électroluminescent (55) est une plaque constituée d'un matériau transparent ayant au moins une surface réfléchissant la lumière (56) pour une émission de lumière dirigée.

3. Système d'éclairage selon la revendication 2,
**caractérisé en ce que**
la plaque (55) comprend au moins une surface de diffusion de lumière (57) ou une partie de diffusion de lumière (60, 61) qui forme directement la surface électroluminescente (57).

4. Système d'éclairage selon l'une quelconque des revendications 1 à 3,
**caractérisé en ce que**
l'élément électroluminescent est une plaque (55) comprenant une pluralité de sections électroluminescentes successives (60, 61) agencées de manière séquentielle dans une direction de déplacement de la lumière.

5. Système d'éclairage selon l'une quelconque des revendications 1 à 4,
**caractérisé en ce que**
la source de lumière centrale (11) est un laser blanc ou une source de lumière à DEL blanche.

6. Système d'éclairage selon l'une quelconque des revendications 1 à 5,
**caractérisé en ce que**
les guides de lumière (41, 16, 24, 32, 40) sont des fibres de transmission optique.

7. Système d'éclairage selon l'une quelconque des revendications 1 à 6,
**caractérisé en ce que**
le système comprend au moins l'un parmi un groupe d'éléments électroluminescents (13, 14, 15 ; 22, 23 ; 29, 30, 31), et chacun des éléments électroluminescents (13, 14, 15 ; 22, 23 ; 29, 30, 31) du même groupe est connecté par le même guide de lumière dédié (16, 24, 32) comportant une section de guide de lumière commune (17, 25, 33) connectant les éléments électroluminescents (13, 14, 15 ; 22, 23 ; 29, 30, 31) à la source de lumière centrale (11).

8. Système d'éclairage selon la revendication 7,
**caractérisé en ce que**
le guide de lumière dédié (16, 24, 32) est constitué d'une section de guide de lumière commune (17, 25, 33) et d'au moins une branche de guide de lumière (18, 19, 20 ; 26, 27 ; 34, 35, 36, 37) pour chacun des éléments électroluminescents (13, 14, 15 ; 22, 23 ; 29, 30, 31) du groupe, dans lequel les branches de guide de lumière (18, 19, 20 ; 26, 27 ; 34, 35, 36, 37) sont épissés directement ou indirectement à la section de guide de lumière commune (17, 25, 33).

9. Système d'éclairage selon l'une quelconque des revendications 1 à 8,
**caractérisé en ce que**
au moins un modulateur spatial de lumière (53) est prévu pour au moins l'un parmi les éléments électroluminescents (12, 13, 14, 15, 22, 23, 29, 30, 31) pour atténuer ou bloquer sélectivement l'émission de lumière.
